# DEMANDE DE BREVET EUROPEEN

(11) **EP 0 965 273 A1**
(43) Date de publication de la demande: **22.12.1999**
(21) Numéro de dépôt: 98201834.3
(22) Date de dépôt: 03.06.1998
(51) Int. Cl.: A23F 5/44, A23L 1/20

(54) **Procédé de préparation d'un succédané de café**

(71) Demandeur: SOCIETE DES PRODUITS NESTLE S.A., 1800 Vevey (CH)
(72) Inventeur: Cerise, Léon, 1807 Blonay (CH)
(74) Mandataire: Vuille, Roman

(57) **Abrégé**

Procédé de préparation d'un succédané de café, dans lequel on chauffe sous pression un mélange de farine de soya dégraissée et d'eau, et l'on prolonge le chauffage de manière à obtenir un succédané de café fluide et son utilisation comme agent aromatisant.

## Description

La présente invention a pour objet un procédé de préparation d'un succédané de café. Elle a également pour objet l'utilisation de ce succédané comme agent aromatisant conférant le goût de café à des boissons ou des confiseries et les compositions préparées à partir de ce succédané.

Depuis longtemps la recherche agro-alimentaire s'est efforcée de mettre au point des molécules ou des produits qui peuvent se substituer au café dans la préparation de boissons, de confiserie ou autre produits alimentaires.

De nombreux brevets décrivent de tels substituts. Le brevet US 1565736 décrit un substitut pour le café à base de chicorée, orge rôtie, fèves de soya et un arôme de café. Le document GB 2 046 076 décrit un procédé de préparation d'un produit à base de fèves de soya, dans lequel les cotylédons sont grillés puis réduits en poudre, qui peut être utilisé en remplacement du cacao, du café et/ou du caramel dans les produits alimentaires aromatisés.

Le brevet WO 86/03943 décrit un procédé de préparation d'un arôme de café à base de farine de soya qui subit une hydrolyse enzymatique puis une extraction après chauffage.

Le brevet EP 0585 632 décrit un produit alimentaire à base de fèves de soya et son procédé d'obtention dans lequel les fèves sont enrobées avec un compose glucidique puis torréfiées.

Tous ces procédés font intervenir des étapes telles que la torréfaction, l'hydrolyse ou autres étapes complexes. Ils sont de mise en oeuvre lourde.

Les fèves de soja font partie des composés utilisables pour la préparation de substituts de café, mais également d'autres "arômes" comme par exemple pour imiter le goût de viande.
On sait que des isolats de soya, traités thermiquement subissent une thermolyse ou une carbonisation, ce qui les rendent inutilisables pour préparer des succédanés de café.

On a trouvé de manière surprenante que la farine de soya dégraissée, traitée par un procédé adéquat, développe une réaction de type Maillard conférant au produit obtenu le goût amer qui rappelle celui du café.

Dans le procédé selon la présente invention, on chauffe sous pression un mélange de farine de soya dégraissée et d'eau, et l'on prolonge le chauffage de manière à obtenir un succédané de café fluide.

Pour mettre en oeuvre la présente invention, on réalise un mélange de farine de soya dégraissée et d'eau. Le mélange peut présenter une teneur en matière sèche comprise entre 35 et 50%. Ce mélange constitue une pâte de farine de soya.

Le soya peut être utilisé sous la forme de farine dégraissée dont la matière sèche est de préférence comprise entre 5 et 10 %.

Le mélange est chauffé sous pression de préférence dans un extrudeur bi-vis à une température qui peut être comprise entre 130 et 180°C durant 20 à 60 secondes. La pression absolue peut être comprise entre 10 et 40 MPa, par exemple.

La pâte de soya extrudée est ensuite maintenue à haute température de manière à obtenir un succédané de café fluide. Ce traitement consiste à la placer dans une cuve de rétention thermostatisée à une température de préférence comprise entre 150 et 180°C et une pression absolue de 25 à 40 MPa et ce durant 20 à 80 minutes.

De façon à avoir un procédé continu, l'extrudeur bivis peut alimenter directement la cuve de rétention thermostatisée.

Le succédané de café fluide obtenu est en grande partie soluble, il peut être ensuite refroidi sur échangeur de chaleur tubulaire jusqu'à une température inférieure à 100°C, par exemple. Il peut être alors déshydraté sous forme de poudre jusqu'à une teneur en eau de 3 à 5%, par exemple sur un sécheur à dispersion.

Le succédané de café fluide refroidi peut également être mélangé à différents additifs dans un mélangeur, comme par exemple de l'hydroxyde de potassium KOH à raison de 0,5 à 2,5% pour augmenter sa solubilité.

Le succédané de café obtenu a un goût amer typique, qui rappelle celui du café. Il peut être utilisé dans de nombreuses applications. Il permet de réaliser des compositions pour boissons ou utilisables en confiserie, dans ce dernier cas ces compositions peuvent être ensuite extrudées en pastilles puis séchées si nécessaire.

Pour préparer de tels produits, on mélange de préférence 10 à 60% de succédané de café avec:
- des édulcorants à raison de 20 à 50% ou,
- des maltodextrines à raison de 10 à 90% ou,
- d'un hydrolysat de céréales à raison de 10 à 90% (pour les applications en confiserie par exemple) ou,
- d'un lait de soya en poudre à raison de 10 à 50%

Les exemples décrits ci-dessous ne sont pas limitatifs et servent à illustrer l'invention. Les pourcentages et les parties sont indiqués en poids.

### Exemple 1

On réalise, dans une extrudeuse bi-vis, un mélange contenant 40 kg de farine de soya dégraissée et 60 l d'eau. Le mélange est chauffé dans l'extrudeuse à 160°C pendant 20 s sous une pression absolue de 10 Mpa. L'extrudeuse alimente une cuve de rétention thermostatisée où le mélange est alors traité thermiquement à 160°C pendant 60 mn sous une pression absolue de 25 MPa.

Le produit obtenu est un succédané de café fluide, il est refroidi sur échangeur de chaleur tubulaire jusqu'à une température de 96°C.

Pour augmenter la solubilité, on peut neutraliser le succédané de café avec de l'hydroxyde de potassium jusqu'à pH 6,7 (environ 2% de KOH sur matière sèche) en batch ou en continu.

### Exemple 2

Le succédané de café fluide obtenu par le procédé décrit dans l'exemple l est séché sur un sécheur à dispersion jusqu'à une teneur en eau de 2%.
On obtient alors le succédané de café sous forme d'une poudre soluble pour la préparation de boissons au goût de café.

Pour préparer une de ces boissons, on mélange 2,4 g de cette poudre à 150 ml d'eau. On peut également préparer une boisson sucrée en mélangeant 1,57g de cette poudre et 1,57g de sucre à 150 ml d'eau.
La boisson obtenue a un goût amer agréable qui rappelle celui du café.

### Exemple 3

On mélange 18 g de succédané de café fluide obtenu selon l'exemple 1 à 82 g d'une farine de céréale enzymatiquement hydrolysée. Le mélange obtenu a une teneur en matières sèches d'environ 90%, il est extrudé sous forme de pastilles. Ces pastilles sont ensuite séchées pendant environ 10 mn à une température de 100°C.

Ces pastilles à mâcher ont le goût amer typique du café et se conservent à température ambiante. Elles ont de plus la particularité de ne laisser aucun résidu dans la bouche puisque 100% comestibles.

### Exemple 4

On ajoute 12 g de succédané de café en poudre tel qu'obtenu par le procédé décrit dans l'exemple 1, pour aromatiser un lait de soya constitué de 44 g d'extrait de soja en poudre et 44 g de sucre. Ce mélange en poudre fournit une boisson instanée de soja aromatisé au goût de café lorsqu'on disperse 10 g du mélange dans 90 ml d'eau.

## Revendications

1. Procédé de préparation d'un succédané de café, dans lequel on chauffe sous pression un mélange de farine de soya dégraissée et d'eau, et l'on prolonge le chauffage de manière à obtenir un succédané de café fluide.

2. Procédé selon la revendication 1, dans lequel on chauffe le mélange à 130-180°C sous une pression de 10-40 Mpa durant 20-60s.

3. Procédé selon la revendication 1, dans lequel on chauffe sous pression le mélange dans un extrudeur bi-vis.

4. Procédé selon la revendication 1, dans lequel le chauffage est prolongé dans une cuve thermostatisée entre 150 et 180°C sous une pression absolue comprise entre 25 et 40 MPa durant 20 à 80 minutes.

5. Procédé selon la revendication 1, dans lequel le mélange de farine de soya et d'eau présente une teneur en matière sèche de 35-50%.

6. Procédé selon l'une des revendication 1 à 5, dans lequel on déshydrate le succédané de café fluide jusqu'à une teneur en eau de 3-5%.

7. Procédé selon l'une des revendication 1 à 6, dans lequel on neutralise le succédané de café fluide.

8. Utilisation du succédané de café fluide obtenu par le procédé selon les revendications 1 à 7 comme agent aromatisant.

9. Composition pour boisson, comprenant 10-60% de succédané de café en poudre susceptible d'être obtenu par le procédé selon les revendications 1 à 7, et 20 à 50% d'édulcorant, ainsi que 10-90% de maltodextrine, et/ou 10-90% d'un hydrolysat de céréales, et/ou 10-50% d'un lait de soya en poudre.
